Europäisches Patentamt

European Patent Office

Office européen des brevets

(19)

(11) Numéro de publication: **0 022 000**
**A1**

(12) ## DEMANDE DE BREVET EUROPEEN

(21) Numéro de dépôt: **80400906.6**

(22) Date de dépôt: **19.06.80**

(51) Int. Cl.³: **H 01 R 13/447**
**G 02 B 5/14**

(30) Priorité: **20.06.79 FR 7915803**

(43) Date de publication de la demande:
**07.01.81 Bulletin 81/1**

(84) Etats Contractants Désignés:
**BE DE GB IT NL SE**

(71) Demandeur: **SOCAPEX**
**10bis, quai Léon Blum**
**F-92153 Suresnes(FR)**

(72) Inventeur: **Guerrero, Michel**
**"THOMSON-CSF" SCPI 173, Bld Haussmann**
**F-75360 Paris Cedex 08(FR)**

(72) Inventeur: **Malsot, Christian**
**"THOMSON-CSF" SCPI 173, Bld Haussmann**
**F-75360 Paris Cedex 08(FR)**

(74) Mandataire: **Eisenbeth, Jacques Pierre et al,**
**"THOMSON-CSF" - SCPI 173, bld Haussmann**
**F-75360 Paris Cedex 08(FR)**

(54) **Dispositif de protection pour connecteur, et connecteur muni d'un tel dispositif de protection.**

(57) L'invention concerne le domaine des connecteurs destinés à une utilisation en environnement adverse.

Elle met en oeuvre un dispositif de protection des éléments de contact (4), constitué de deux disques (6) et (7), disposés devant la face de contact de chaque embout, et percés d'ouvertures telles que (8) et (9). Les ouvertures (9) sont normalement masquées par le disque intérieur (6), et elles ne sont ouvertes aux éléments de contact qu'au moment du raccordement, sous l'action de la bague de commande (30), portant un tenon (31) coopérant avec des rainures (27) et (41).

Les applications sont notamment du domaine des caméras de télévision et des recherches pétrolières.

Fig.3

EP 0 022 000 A1

1

DISPOSITIF DE PROTECTION POUR CONNECTEUR, ET CONNECTEUR MUNI D'UN TEL DISPOSITIF DE PROTECTION.

La présente invention se rapporte au domaine technique des connecteurs, et concerne particulièrement ceux qui sont destinés à une mise en oeuvre en environnement adverse, comportant la présence d'eau, de boue, ou d'atmosphère corrosives par exemple.

La transmission à faibles pertes de la grandeur à acheminer, de nature électrique ou lumineuse par exemple, est compromise dans un tel environnement, par suite des impuretés ou altérations qu'il provoque sur les surfaces actives du connecteur assurant la transmission.

C'est pourquoi il a été proposé de munir les deux parties ou "embouts" constituant un connecteur, de dispositifs de protection des faces dont la mise en vis-à-vis réalise le raccordement, sous la forme de volets mobiles, qui, normalement fermés lorsque les embouts sont séparés, ne sont ouverts que lors de l'enfichage.

Les réalisations connues souffrent cependant de divers inconvénients, dont les plus graves sont, d'une part, l'augmentation de l'encombrement du connecteur ainsi équipé, dont les volets de protection et les logements prévus pour les recevoir font saillie en dehors de leur contour extérieur , et d'autre part, pour des raisons analogues, leur fragilité.

C'est un but de la présente invention que de proposer un connecteur ne comportant pas ces inconvénients, le dispositif de protection étant logé à l'intérieur de l'embout, donc protégé et non-encombrant.

2

Un second inconvénient, dans certaines utilisations, s'attache aux connecteurs connus, celles où une grande longueur de câble terminée par des embouts de connecteur est mise en oeuvre en environnement adverse.

C'est le cas par exemple dans le domaine de la télévision, pour le raccordement des caméras ; c'est aussi le cas des recherches de gisements pétrolifères, où un grand nombre de tels câbles, de longueur unitaire de l'ordre d'une centaine de mètres, sont mis en place sur des terrains poussièreux ou humides.

Dans ces utilisations, une erreur sur le type "mâle" ou "femelle" de l'embout de connecteur terminal oblige à inverser les deux extrémités de câble ce qui conduit à d'importants déplacements sur le terrain, d'où des pertes en temps et en personnel inadmissibles.

C'est un autre but de l'invention que de proposer un connecteur pour environnement adverse ne conduisant pas à de telles permutations, ce connecteur étant constitué d'une paire d'embouts identiques, qui dans toute la suite, seront par voie de simplification désignés sous le terme d'hermaphrodite.

Dans son fondement, l'invention met en oeuvre deux groupes de moyens de protection, l'un visant à protéger la face active de chaque embout non connecté, l'autre le connecteur après assemblage des deux embouts et raccordement des câbles.

Le premier groupe de moyens met en oeuvre deux disques concentriques, percés d'ouvertures, et

3

disposés parallèlement à la face antérieure de contact de chaque embout. Lorsqu'un embout est déconnecté, les deux disques sont mutuellement orientés de telle sorte que chaque ouverture respective de l'un soit placée en vis-à-vis d'une partie pleine de l'autre, assurant la protection de la face de contact ; au moment de l'enfichage, l'un des disques est soumis à une rotation par rapport à l'autre, de telle sorte que leurs ouvertures respectives soient en vis-à-vis, en découvrant la face de contact et les éléments actifs nécessaires à la transmission.

Les opérations de connexion comportant donc un certain nombre d'étapes, qui exigent d'être effectuées dans un ordre prédéterminé, à savoir rotation du disque d'obturation pour découvrir les ouvertures du disque fixe de la face avant de contact, translation vers l'avant de l'embout pour mettre en saillie ses éléments conducteurs à travers les ouvertures, et verrouillage en position "avant" de l'embout. Les opérations de déconnexion comprennent les étapes inverses, à savoir déverrouillage de l'embout, translation de l'embout vers l'arrière pour libérer les ouvertures, et rotation du disque d'obturation pour fermer les ouvertures de la face avant.

C'est encore un autre but de la présente invention que de proposer un système de commande du dispositif de protection réalisant la succession d'étapes énumérées ci-dessus avec un seul moyen, permettant à l'utilisateur d'effectuer celles-ci aisément, sans erreur, et en environnement adverse.

0022000

4

Le second groupe de moyens est constitué par une enveloppe mobile, qui vient alors, par translation, recouvrir la surface latérale de l'ensemble des deux embouts, en assurant la protection de leur contour de jonction commun.

Les surfaces de contact des disques, ainsi que celle de l'enveloppe, portent des logements en forme de gorges pour recevoir des anneaux élastiques assurant l'étanchéité antre les éléments correspondants fixes et mobiles du connecteur. Plus précisément, l'invention consiste en un dispositif de protection pour connecteur, ce connecteur étant constitué de deux embouts, comportant chacun un bloc isolant présentant une face de contact antérieure et une pluralité d'éléments de contact en saillie sur cette face, caractérisé en ce qu'il comprend deux disques disposés parallèlement à la face de contact, munis d'ouvertures de même disposition que les éléments de contact, et capables d'une part d'un mouvement de rotation de l'un par rapport à l'autre, découvrant ces éléments, et d'autre part d'un mouvement de translation perpendiculaire à la face de contact plaçant ces éléments en saillie à travers les ouvertures, des moyens de commande assurant la succession des étapes de rotation et de translation suivant un ordre pré-établi.

L'invention sera mieux comprise à l'aide de la description ci-après, en s'appuyant sur les dessins annexés, où :

- La figure 1 représente en perspective, une vue en partielle d'un connecteur et d'un dispositif de protection suivant l'invention :

- La figure 2 représente, en perspective, suivant une vue éclatée, un mode de réalisation du dispositif de protection suivant l'invention ;

- La figure 3 représente un autre mode de réalisation, comportant un verrouillage automatique ;

- La figure 4 représente un manchon de protection latérale selon l'invention.

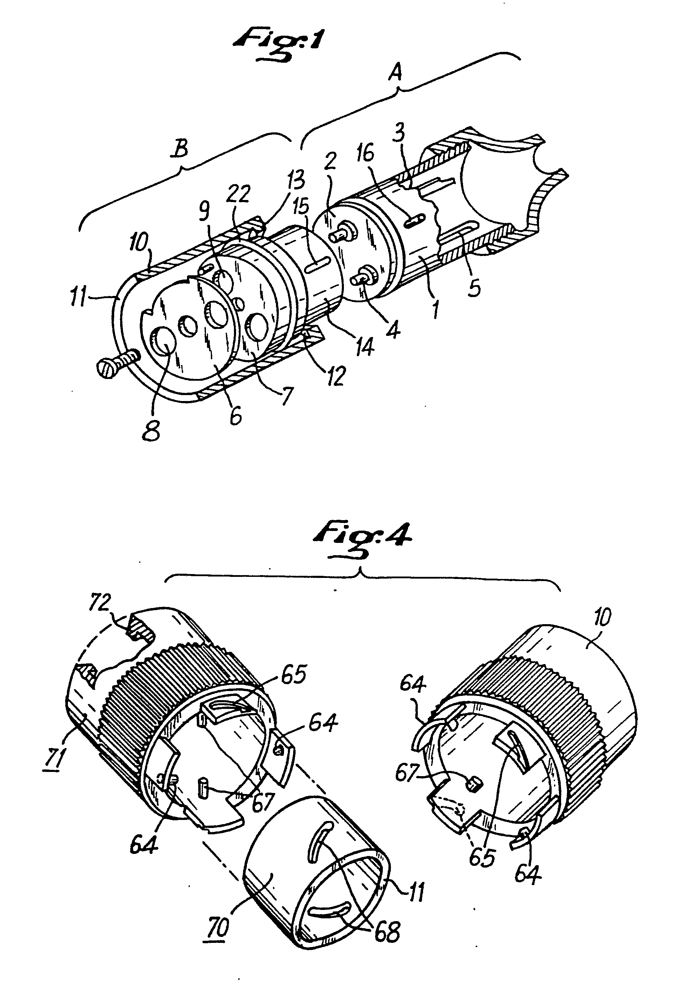

La figure 1 représente en perspective une vue schématique en coupe partielle, d'un connecteur et d'un dispositif de protection selon l'invention.

Le connecteur, référencé en A, comporte un corps ou bloc isolant 1 présentant une paroi avec deux faces, à savoir une face avant 2 sur laquelle débouchent des éléments de contact tels que 4 et une face arrière 3 d'où font saillie les extrêmités de raccordement 5 des éléments de contact.

Le dispositif de protection, placé devant la face avant 2 du connecteur est représenté en B. Il comporte deux disques 6 et 7, dont l'un peut avoir un mouvement relatif de rotation par rapport à l'autre, autour d'un axe. Chacun porte des ouvertures telles que 8 et 9, de dimensions et de disposition telles qu'elles peuvent donner passage aux éléments de contact.

Les deux disques peuvent, de plus, avoir un mouvement de translation perpendiculaire à leur plan.

Enfin, un manchon cylindrique 10, disposé coaxialement avec les deux disques, peut occuper, par translation suivant son axe, deux positions, l'une où sa surface de base 11 est alignée avec les disques, l'autre où il recouvre ceux-ci, cette translation étant limitée par les bourrelets 12 et 13, coopérant

6

pour réaliser une butée.

Pour l'utilisation du dispositif de protection, il est préférable que l'un des disques soit assujetti à présenter ses ouvertures suivant la même orientation que les éléments de contact du connecteur, l'autre disque assurant le rôle d'obturateur rotatif. Pour cela, un des disques est muni d'un manchon d'orientation 14 doté d'une rainure 15 coopérant avec un tenon 16 porté par l'embout 1 du connecteur.

Il est à remarquer que le disque obturateur 6 est, sur le mode de réalisation de la figure 1, disposé sur le côté externe du second disque 7, ce qui en permet la commande de rotation aisée.

Il est aussi possible, à titre de variante, de le disposer sur le côté interne du second disque 7, ce qui conduit à une commande de rotation moins aisée, mais le protège contre les causes de dégradation et chocs extérieurs.

Le dispositif de protection de la figure 1 fonctionne de la façon suivante :

Lorsque l'embout du connecteur est à l'état déconnecté, le manchon 10 est en position arrière, et sa surface de base 11 est alignée avec les disques ; le disque obturateur 6 est orienté, par rapport au disque fixe 7, de telle sorte que ses ouvertures 8 sont en vis-à-vis des parties pleines de celui-ci. L'embout de connecteur est ainsi protégé contre l'environnement adverse.

Lors du raccordement, le disque obturateur tourne d'un angle donné pour mettre ses ouvertures 8 en coïncidence avec celles du disque fixe 9 ; l'embout

7

1 avance alors, et ses éléments de contact 4 font saillie vers l'extérieur du dispositif de protection.

Le raccordement est alors possible, avec l'embout complémentaire, non représenté, du connecteur. Enfin, le manchon de protection 10 est poussé en direction de cet embout complémentaire, qu'il recouvre partiellement en protégeant les faces antérieures de contact contre les impuretés, après le raccordement terminé.

Pour la déconnexion, les opérations passent par une suite d'étapes se déroulant en ordre inverse. Il est à noter que toute erreur dans la bonne observation des étapes des deux types d'opérations, - connexion et déconnexion -, compromet le fonctionnement du dispositif de protection et du connecteur lui-même. C'est le rôle du dispositif de commande selon l'invention que d'interdire toute erreur.

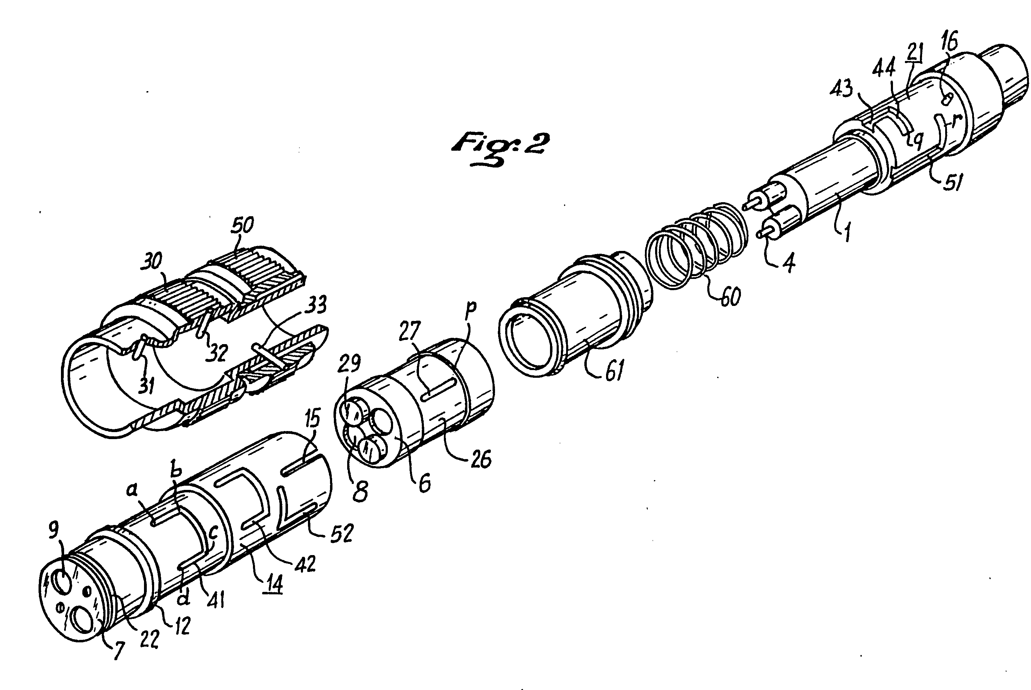

La figure 2 représente, suivant une vue éclatée en perspective, un mode de réalisation du dispositif de protection selon l'invention.

Ce mode correspond au cas où le disque obturateur 6 est disposé en arrière du disque d'orientation fixe 7, comme expliqué à la fin de la description de la figure 1.

L'embout de connecteur est représenté en 1, et le dispositif de protection, dont on retrouve les éléments de la figure 1, se compose d'un bloc-support 21 pour l'embout 1 du disque extérieur 7 porté par son manchon 14, dont l'orientation fixe par rapport à l'embout est assurée par la rainure 15 coopérant avec le tenon 16, et du disque obturateur intérieur

8

6, porté par son manchon 26, dont la rotation est assurée par la rainure 27, coopérant avec un tenon du système de commande qui sera décrit maintenant.

Le système de commande fait appel, dans son fondement, à une bague de manoeuvre extérieure 30, disposée concentriquement à l'embout, et dont l'action sur les manchons des disques 6 et 7 s'effectue par des tenons tels que 31 et 32, coopérant avec des rainures telles que 41, 42 et 27 portées par les éléments du dispositif de protection. Les mouvements de la bague de manoeuvre sont dirigés par des rainures de guidage telles que 41 et 42, portées par le manchon 14 du disque extérieur 7, assurant ainsi la succession, dans un ordre déterminé, des étapes de fonctionnement, en interdisant toute erreur dans cet ordre.

Une seconde bague 50, portée par la bague de manoeuvre 30, assure, à la fin de l'étape de connexion, le verrouillage, en position avant, de l'embout 1 et de son bloc-support 21, par action de son tenon 33 dans la partie circulaire de la rainure de blocage 51.

Enfin, un ressort 60, contenu dans un manchon de protection 61, assure le rattrapage des jeux mécaniques pouvant exister entre les divers tenons et rainures du système de commande.

Le fonctionnement du dispositif de protection proprement dit est le même que celui du dispositif schématisé sur la figure 1.

En partant de la situation où l'embout 1 est déconnecté, le bloc-support est en position arrière, sous l'action du tenon 32 coopérant avec la partie circulaire

9

44 de la rainure du bloc-support. L'obturateur 6 est fermé, sous l'action du tenon 31 coopérant avec la rainure 27. Il est à remarquer que des cylindres ou "plots" tels que 29 peuvent être fixés sur le disque-obturateur 6, de façon à obturer les ouvertures 9 en présentant une face antérieure 7 absolument plane, donc aisée à nettoyer en cas de souillure, lorsque l'embout est à l'état déconnecté, donc particulièrement vulnérable aux souillures.

Pour l'opération de raccordement, la bague de commande va décrire des mouvements dirigés par les rainures de guidage 41 et 42.

Un premier mouvement, vers l'arrière, correspondant à la portion (a b) de la rainure, fait reculer le manchon-obturateur 26 par action du tenon 31 sur la portion (p) de sa rainure. Les autres tenons n'exercent aucune action, car ils sont placés dans des portions de leurs rainures associées qui sont parallèles au déplacement axial de la bague de commande.

Dans un deuxième mouvement, la bague exécute une rotation, dirigé par la portion (b c) de la rainure de guidage ; le disque obturateur exécute alors une rotation mettant ses ouvertures 8 en vis-à-vis de celles du disque antérieur 9.

Dans un troisième mouvement, la bague de commande exécute une translation vers l'avant, permise par la portion (c d) de la rainure de guidage. Le disque obturateur 6 reste fixe, le tenon 31 qui le commande se déplaçant librement dans sa rainure 27. En revanche, l'embout 1 et son bloc-support 21 se déplacent vers l'avant, et les éléments de contact tels que

10

4 font saillie par rapport au disque antérieur 7, car le tenon 32 qui le commande s'appuie sur l'extrémité de la rainure de commande, qui est circulaire dans cette portion.

Le ressort 60 est alors dans son état comprimé dans son manchon de protection 61 et il est nécessaire de verrouiller l'embout et son bloc support dans leur position-avant. C'est le rôle de la bague de verrouillage 50, munie d'un tenon de verrouillage 33, se déplaçant dans la rainure de commande 51 portée par le bloc, et la rainure de verrouillage 52 portée par le manchon extérieur 14.

Par rotation de la bague 50, le tenon 33 prend appui sur la portion r de la rainure de verrouillage, ce qui termine l'ensemble de l'opération de raccordement, l'autre embout correspondant, non représenté, du connecteur, ayant subi le même ensemble d'étapes.

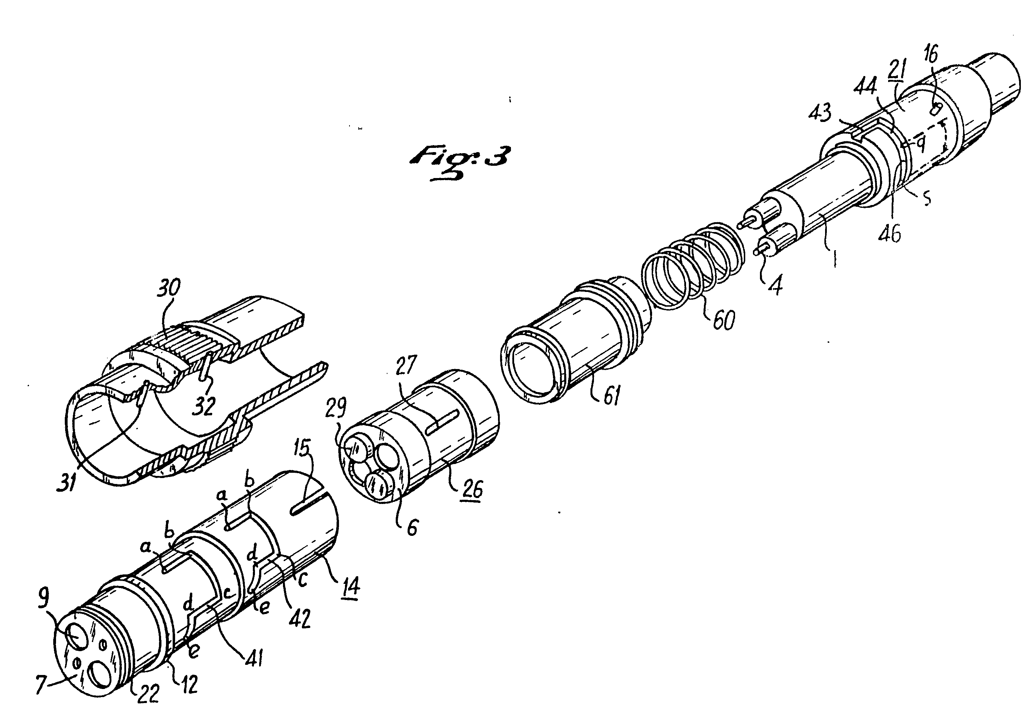

La figure 3 représente un autre mode de réalisation du dispositif de protection de l'invention particulièrement avantageux, par suppression de la bague de verrouillage de la figure 2.

Il y est fait appel, dans cette fonction, au tenon 32 et à sa rainure de guidage 42, déjà mis en oeuvre pour la translation vers l'avant, de l'embout 1 et de son bloc 21.

Suivant ce mode, la rainure de guidage 42, est pourvue d'une portion supplémentaire circulaire (d,e) sur laquelle le tenon 32 peut exercer un appui, simultanément avec l'appui qu'il exerce dans une portion supplémentaire circulaire (q, s) portée par le bloc-

11

support d'embout 21.

L'obtention de l'étape finale de verrouillage est alors particulièrement simple, puisqu'elle se limite, après l'étape de mise en position avancée de l'embout, à exercer une rotation supplémentaire de la bague de commande, faisant parcourir au tenon 32 la portion restante 'd, e) de la rainure de guidage.

La figure 4 représente un mode de réalisation avantageux de la bague de protection 10 de la figure 1.

Après le raccordement proprement dit, il est nécessaire de protéger la région latérale de contact contre les souillures, et selon l'invention, on combine cette fonction avec celle de la fonction d'accouplement des deux embouts.

Pour cela, la bague de protection 10 de la figure 1 est scindée en deux parties : une partie antérieure 70, assurant la fonction de protection proprement dite, coopérant avec un joint élastique 22 portée par le manchon fixe externe 14 représenté sur les figures 2 ou 3, en assurant l'étanchéité contre les souillures.

Cette partie antérieure 70 est fixée sur une partie postérieure 71 de la bague de protection, par des tenons tels que 67, coopérant avec des rainures hélicoïdales 68, partie munie d'un bourrelet d'appui 72, s'appuyant sur un bourrelet 12 porté par le manchon fixe externe 14 des figures 2 ou 3.

Le fonctionnement de la bague de protection est le suivant ; les deux embouts du connecteur portant chacun une telle bague, l'une d'elles, - au choix de

12

l'utilisateur -, est mise en position avancée par
rotation de sa partie antérieure 70 par rapport à
sa partie postérieure 71, les tenons tels que 67 se
déplaçant dans les rainures hélicoïdales telles que
68. Les deux embouts sont alors mis en vis-à-vis, et
la connexion peut avoir lieu, les deux embouts étant
rendus solidaires par tout moyen connu.

Cependant, selon l'invention, il a été trouvé
particulièrement avantageux de faire assumer à la bague
de protection une seconde fonction, celle d'assemblage
des deux embouts.

Pour cela, la partie postérieure 71 de la
bague porte des moyens d'accouplement sur sa face
antérieure. Ces moyens peuvent être des filetages complémentaires, mais suivant un mode de réalisation particulièrement avantageux, l'invention propose, pour ces
moyens, une pluralité de tenons 64 et de gorges 65
disposés en secteurs interrompus régulièrement répartis,
et coopérant entre eux, à la manière de filets de vis à
"pas multiples".

Les deux fonctions sont alors assumées par
le même moyen, simplifiant ainsi la structure du dispositif de protection contre l'environnement adverse, et
le type hermaphrodite de la bague d'accouplement évite
de plus, les inconvénients, indiqués plus haut, d'erreurs
sur le type "mâle" ou "femelle" des embouts de longs
câbles.

Il est par ailleurs à noter que la mise en
oeuvre de la bague de protection, qui, dans ce qui
précède, a été décrite comme constituant l'étape finale
d'assemblage des deux embouts, peut également, sans

13

sortir du domaine de l'invention, en constituer l'étape initiale, les opérations de connexion proprement dites s'effectuant sous l'abri du manchon de protection ; ces opérations se font alors sans possibilité de contrôle visuel.

Il est enfin à remarquer que, dans tout ce qui précède, la structure du dispositif de l'invention ne dépend pas du type de connecteur et de la grandeur physique que ce connecteur a la charge de transmettre. C'est ainsi que, bien que le raccordement de conducteurs électriques constitue une utilisation importante de connecteurs munis du dispositif de protection de l'invention, le raccordement de fibres optiques est compris dans le domaine de celle-ci.

## REVENDICATIONS

1. Dispositif de protection pour connecteur, ce connecteur étant constitué de deux embouts, comportant chacun un bloc isolant (1) présentant une face de contact antérieure, et une pluralité d'éléments de contact (4) en saillie sur cette face, caractérisé en ce qu'il comprend deux disques, respectivement extérieur (7) et intérieur (6), disposés parallèlement à la face de contact, munis d'ouvertures (8) (9) de même disposition que les éléments de contact, et capables d'une part d'un mouvement de rotation de l'un par rapport à l'autre, découvrant ces éléments, et d'autre part d'un mouvement de translation perpendiculaire à la face de contact, plaçant ces éléments en saillie à travers les ouvertures, des moyens de commande (31) (41) assurant la succession des étapes de rotation et de translation suivant un ordre préétabli.

2. Dispositif selon la revendication 1, caractérisé en ce qu'il comporte un élément élastique exerçant une force antagoniste au mouvement de translation.

3. Dispositif selon la revendication 1, caractérisé en ce qu'il comporte de plus un moyen de verrouillage des éléments de contact dans leur position en saillie.

4. Dispositif selon la revendication 1, caractérisé en ce que les moyens de commande sont constitués par des rainures de guidage portées par des cylindres-supports des disques assemblés coaxialement, ces rainures coopérant avec des tenons portés par un organe de commande.

5. Dispositif selon la revendication 1 caractérisé en ce que le disque extérieur est assujetti à présenter ses ouvertures en vis-à-vis des éléments de contact, par un moyen d'alignement comportant une rainure de guidage coopérant avec un tenon, respectivement portés par le cylindre-support du disque extérieur et l'embout.

6. Dispositif selon la revendication 3, caractérisé en ce que les moyens de verrouillage sont portés par la bague de commande, et consistent en une bague de verrouillage montée coaxialement, munie d'un tenon coopérant avec des rainures respectivement portées par le cylindre-support du disque extérieur et l'embout.

7. Dispositif selon la revendication 3, caractérisé en ce que les moyens de verrouillage sont portés par la bague de commande, et consistent en un tenon, coopérant avec des rainures respectivement portées par le cylindre-support du disque extérieur et l'embout.

8. Dispositif selon la revendication 2, caractérisé en ce que l'élément élastique est constitué par un ressort à boudin logé dans un cylindre de guidage, l'un et l'autre étant montés coaxialement avec l'embout.

9. Dispositif selon la revendication 4, caractérisé en ce que le disque intérieur présente des parties en relief, disposées entre ses ouvertures, pouvant assurer l'obturation des ouvertures du disque extérieur, par un mouvement de translation relatif des cylindres-supports des deux disques, assuré par un tenon coopérant avec une rainure, respectivement portés par la bague de commande et les cylindres-supports.

16

10. Dispositif selon la revendication 4, caractérisé en ce qu'il comporte un manchon de protection, coaxial avec le cylindre-support du disque extérieur, capable d'un mouvement de translation le plaçant en saillie par rapport au disque extérieur .

11. Connecteur, caractérisé en ce que ses deux embouts sont munis d'un dispositif de protection selon l'une des revendications précédentes.

12. Connecteur, selon la revendication 11, caractérisé en ce que le manchon de protection coaxial assume la fonction de bague d'assemblage entre les deux embouts.

13. Connecteur selon la revendication 12, caractérisé en ce que cette bague d'assemblage est du type hermaphrodite.

*Fig:1*

*Fig:4*

Fig. 2

2/3

0022000

Fig.3

0022000

### Office européen des brevets

## RAPPORT DE RECHERCHE EUROPEENNE

Numéro de la demande

EP 80 40 0906

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| | FR - A - 685 374 (SIEMENS-SCHUCKERT) <br> * Page 1, ligne 45 - page 2, ligne 43; figures 1-3 * <br> -- | 1,4,5 | H 01 R 13/447 <br> G 02 B 5/14 |
| | FR - A - 2 358 032 (S.E.P.M.) <br> * Page 4, ligne 21 - page 5, ligne 5; page 6, ligne 8 - page 7, ligne 18; page 8, lignes 7-16; figures * <br> -- | 2-5, 10-12 | |
| | | | DOMAINES TECHNIQUES RECHERCHES (Int. Cl. 3) |
| | US - A - 1 975 467 (E.M. LIVING-STON) <br> * page 2, lignes 25-64; figures * <br> -- | 10,12, 13 | H 01 R 13/447 <br> 13/44 <br> 13/52 <br> 13/60 <br> 13/623 <br> 13/625 |
| | US - A - 2 987 691 (J.I. ROSS) <br> * Figures * <br> -- | 10-13 | G 02 B 5/14 |
| | FR - A - 820 063 (TESTON) <br> * Page 2, lignes 31-74; figures * <br> -- | 3-5 | |
| | | | CATEGORIE DES DOCUMENTS CITES |
| A | DE - B - 1 182 321 (DUNKEL) <br> * Colonne 3, ligne 33 - colonne 4, ligne 12; figures * <br> -- | 2,5,8 | X: particulièrement pertinent <br> A: arrière-plan technologique <br> O: divulgation non-ecrite <br> P: document intercalaire <br> T: théorie ou principe à la base de l'invention <br> E: demande faisant interférence |
| A | FR - A - 831 526 (FRIEMANN & WOLF) <br> * Page 4, lignes 5-41; figures. * <br> -- ./. | 4,5 | D: document cité dans la demande <br> L: document cité pour d'autres raisons |
| | | | &: membre de la même famille, document correspondant |

| Le présent rapport de recherche a été établi pour toutes les revendications | | |
|---|---|---|
| Lieu de la recherche <br> **La Haye** | Date d'achèvement de la recherche <br> **14-08-1980** | Examinateur <br> **RAMBOER** |

OEB Form 1503.1  06.78

0022000

**Office européen des brevets**

## RAPPORT DE RECHERCHE EUROPEENNE

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| A | FR - A - 922 139 (BAUDOT)<br>* Page 2, lignes 93-104; figures * | 1<br>* | |
| A | US - A - 3 112 975 (W.W. HAMEL)<br>* Colonne 3, lignes 37-67; fi-gures * | 1,10-13 | |

**DOMAINES TECHNIQUES RECHERCHES (Int. Cl. 3)**

OEB Form 1503.2 06.78